# EUROPEAN PATENT SPECIFICATION

(11) **EP 4 187 193 B1**
(45) Date of publication and mention of the grant of the patent: **10.09.2025**
(21) Application number: 21210980.5
(22) Date of filing: 29.11.2021
(51) Int. Cl.: F41J 9/10, B64D 3/02, F41J 2/02

(54) **AERIAL TARGET PROVIDED WITH A TOWED IR FLARE SYSTEM**
AERIAL TARGET MIT EINEM GEZOGENEN IR-FLARE-SYSTEM
CIBLE AÉRIENNE MUNIE D'UN SYSTÈME DE FLARE IR REMORQUÉ

(43) Date of publication of application: 31.05.2023
(73) Proprietor: Sistemas de Control Remoto, S.L., 28702 San Sebastian de los Reyes (ES)
(72) Inventor: AYLAGAS ROMERO, Andres, 28703 San Sebastian de los Reyes (ES)
(74) Representative: Lahidalga de Careaga, Jose Luis

(56) References cited:
- US-A- 4 356 984

## Description

### OBJECT OF THE INVENTION

The proposed invention relates to an aerial target provided with a towed IR flare system as an infrared radiation emitter device for marking aerial targets, such that the device can mark the aerial target at short and medium distances (up to 3-4 km) and even at long distance using to that end a dual IR radiation source, by means of respective flares emitting in a narrow band of the spectrum that is compatible with the scanning band of the infrared guidance system in anti-aircraft defense missiles.

### FIELD OF THE INVENTION

The field of the invention is comprised in the aeronautic and auxiliary engineering industry, also having applications in the defense industry.

### BACKGROUND OF THE INVENTION

There are various methods for marking targets in the market of aerial targets today.

Most methods relate to conventional heat sources, such as gas or fuel burners, although another type of radio emitters is also under development.

**Patent** US4356984 (WORTH ROBERT N ET AL**) describes a tow target system for use with a remotely piloted aircraft, including deployment of the target(s) from wing launchers on** a **tow line, braking of the tow line, release of** target **and tow line from the aircraft, and parachute recovery of the jettisoned target.**

The effectiveness of the device proposed in this invention surpasses all the devices mentioned above, particularly the state-of-the-art devices, because the radiation source emits in a narrow band of the spectrum that is compatible with the scanning band of the infrared guiding system in anti-aircraft defense missiles.

Furthermore, the system of separating flares at a suitable distance by means of respective securing cables allows the emitted signal to be suitably calibrated and located where required.

Therefore, the features of this invention are considered new, and all these features combined are not anticipated in any known embodiment.

The inventor is not aware of any earlier invention which incorporates the arrangements of the present invention or the advantages entailed by said arrangement.

### DESCRIPTION OF THE INVENTION

The invention is defined by an aerial target according to claim 1. Preferred embodiments are defined in the dependent claims.
The proposed invention relates to an aerial target provided with a towed IR flare system as an infrared radiation emitter device for marking aerial targets, preferably located at the tip of the wings of the mentioned aerial target.

The device can therefore mark the aerial target at short and medium distances (up to 3-4 km) and even at long distance using to that end a dual IR radiation source by means of respective flares emitting in a narrow band of the spectrum that is compatible with the scanning band of the infrared guidance system in anti-aircraft defense missiles.

The aerial target is made up of a support device for an assembly which supports several elements mainly including, among others, a fixing support screwed to the wing of the aircraft, wherein a double L-shaped front support is located in the front portion which will be used for aligning steel pulling cables and on the sides there are located, perpendicular thereto, respective shafts bearing respective rollers along with respective clutches intended for winding/unwinding respective braided steel cables which, following passage through cable alignment supports, are secured to at least two IR flares, and wherein the internal control elements would be an electronic control unit, a battery for powering the assembly, respective magnetic switches for activating beacons, a pyrotechnic sequencer, a protection sequencer to prevent the accidental firing of flares, and an autopilot (15). A target controller (CCS) is present as an external element.

### DESCRIPTION OF THE DRAWINGS

In order to better understand the invention, a set of drawings showing the following is attached:

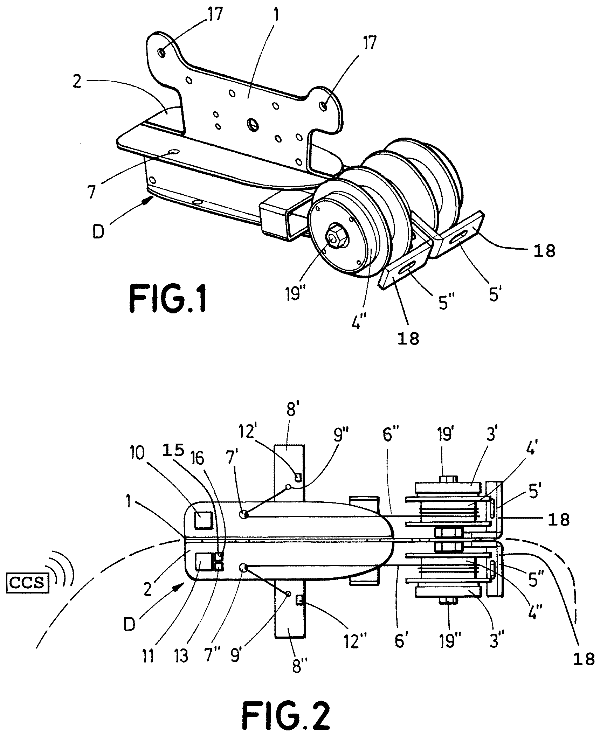

Figure 1 shows a perspective view of the support for the flares.
Figure 2 shows a top plan view of the entire system.

Identical elements are referred to with the same reference numbers in said figures, and these elements include:
(D).- support device for the assembly,
(1).- plate for fixing to the wing,
(2).- body of the fixing support,
(3', 3").- clutches of the rollers,
(4', 4").- rollers for winding cables,
(5', 5") .- cable alignment supports,
(6', 6").- braided steel cable,
(7', 7").- through holes of the cables,
(8', 8").- IR flares,
(9',9").- securing elements for securing the cable to the flare,
(10).- a battery for powering the assembly,
(11).- electronic control unit,
(12', 12").- magnetic switches for activating IR beacons,
(13).- pyrotechnic sequencer,
(15).- autopilot,
(16).- protection sequencer,
(17).- upper holes,
(18).- double L-shaped front support,
(19', 19").- shafts for supporting the rollers,
**(CCS).-** External remote controller for the aerial target.

### PREFERRED EMBODIMENT OF THE INVENTION

The proposed invention relates to an aerial target provided with a towed IR flare system as an infrared radiation emitter device for marking aerial targets, such that the device can mark the aerial target at short and medium distances (up to 3-4 km) and even at long distance using to that end a dual IR radiation source by means of respective flares emitting in a narrow band of the spectrum that is compatible with the scanning band of the infrared guidance system in anti-aircraft defense missiles.

In a more detailed manner, the aerial target is made up of a support device for an elongated T-shaped assembly (D), made of a high-performance metal alloy and fixed to the tip of the wing of the mentioned aerial target, acting as a support for the following elements:
.- a fixing support (1), formed by a rectangular-shaped thin plate located in the vertical of the imaginary axis of the assembly "D" and the two upper vertices of which have circular extensions with respective holes (17) that will be used for screwing or riveting the assembly (D) to the wing of the aircraft,
.- a double L-shaped front support (18) located in the front portion of the part (D) and made up of two L-shaped parts with flat opposing bases, and wherein there can be seen therein respective rectangular windows (5') and (5") that will be used for aligning braided steel cables (6') and (6).

On the sides of the mentioned part (18) there are located, perpendicular thereto, respective shafts (19') and (19") bearing respective rollers (4') and (4") along with respective clutches (3') and (3'') intended for winding/unwinding respective braided steel cables (6') and (6") which, following passage through cable alignment supports (5') and (5"), are secured to the IR flares (8') and (8") by means of flare securing elements (9') and (9") after going through the through holes (7') and (7").

The following are provided as internal control elements:
.- an electronic control unit (11),
   .- a battery for powering the assembly (10),
   .- magnetic switches for activating IR beacons (12') and (12") to prevent the explosion of the beacons during manipulation.
   .- a pyrotechnic sequencer (13),
   .- a protection sequencer (16) to prevent the accidental firing of flares (8') and (8")
   .- autopilot (15),

There is arranged externally a remote controller (CCS) which manipulates the target by remote control through the communication system of the electronic control unit (11) and the autopilot.

The control and operation of the aerial target are performed by means of the (CCS) which is an external remote controller acting on the electronic control unit (11) to mobilize the aerial target by means of the autopilot (15) and the IR flares (8') and (8") by means of the braided steel cables (6') and (6") securing the flares by means of respective securing elements (9') and (9"), and wherein, in turn, the cables (6') and (6"), by means of the clutches (3') and (3") that gradually unwind the cables wound on the rollers (4') and (4'') going through the alignment supports (5') and (5"), go through the holes (17) until they are secured in the IR flares (8') and (8") so that they can be slowly unwound as controlled by the external controller (CCS).

The aerial target thus formed can be fixed on one wing or on both wings of the aerial target.

Having sufficiently described the nature of the invention, as well as the manner of putting it into practice, it should be stated that the arrangements indicated above and depicted in the attached drawings are susceptible of detail modifications provided that said modifications **still fall under the scope of protection which is defined by the following claims..**

## Claims

1. An aerial target provided with a towed IR flare system, comprising a support device having an elongated T-shaped assembly (D), made of a high-performance metal alloy and fixed to the tip of a wing (14) of the mentioned aerial target, the support device further comprising the following elements:
.- a fixing support (1), formed by a rectangular-shaped thin plate located in the vertical axis of the T-shaped assembly (D) and two upper vertices of which have circular extensions with respective holes (17) for screwing or riveting the T-shaped assembly (D) to the wing of an aircraft,
.- a double L-shaped front support (18) located in the front portion of the T-shaped assembly (D) and made up of two L-shaped parts with flat opposing bases comprising respective rectangular windows (5', 5") for aligning braided steel cables (6', 6"); the support device further comprising on the sides of the double L-shaped front support (18), perpendicular thereto, respective shafts (19', 19") bearing respective rollers (4', 4") along with respective clutches (3', 3") intended for winding/unwinding respective braided steel cables (6', 6") which, following passage through cable alignment supports (5', 5"), are secured to the IR flares (8', 8") by means of flare securing elements (9', 9") after going through through holes (7', 7") located in the T-shaped assembly (D); the aerial target further comprising the following internal control elements:
.- an electronic control unit (11),
.- a battery for powering the assembly (10),
.- magnetic switches (12', 12") for activating IR beacons,
.- a pyrotechnic sequencer (13),
.- a protection sequencer (16) to prevent the accidental firing of flares (8', 8")
.- autopilot (15);
a target controller (CCS) being present as an external element.

2. The aerial target provided with a towed IR flare system according to claim 1 and **characterized in that** the control and operation of the aerial target are performed by means of the (CCS) which is an external remote controller acting on the electronic control unit (11) to mobilize the aerial target by means of the autopilot (15) and the IR flares (8') and (8") by means of the braided steel cables (6') and (6") securing the flares by means of respective securing elements (9') and (9"), and wherein, in turn, the cables (6') and (6"), by means of the clutches (3') and (3") that gradually unwind the cables wound on the rollers (4') and (4") going through the alignment supports (5') and (5"), go through the holes (17) until they are secured in the IR flares (8') and (8") so that they can be slowly unwound as controlled by the external controller (CCS).

3. The aerial target provided with a towed IR flare system according to the preceding claims and **characterized in that** the flare support device (2) is fixed on one wing or on both wings of the aerial target.

## Patentansprüche

1. Ein Luftziel, das mit einem geschleppten IR-Leuchtsignalsystem ausgestattet ist, **dadurch gekennzeichnet, dass** es aus einer Haltevorrichtung für eine längliche T-förmige Baugruppe (D) besteht, die aus einer hochleistungsfähigen Metalllegierung gefertigt und an der Spitze des Flügels (14) des genannten Luftziels befestigt ist und als Halterung für die folgenden Elemente dient:
.- einer Befestigungshalterung (1), die aus einer rechteckigen dünnen Platte besteht, die sich in der Vertikalen der imaginären Achse der Baugruppe "D" befindet und deren beiden oberen Eckpunkte kreisförmige Verlängerungen mit entsprechenden Löchern (17) aufweisen, die zum Verschrauben oder Vernieten der Baugruppe (D) am Flügel (14) des Flugzeugs verwendet werden,
.- eine doppelte L-förmige vordere Halterung (18), die sich im vorderen Teil des Teils (D) befindet und aus zwei L-förmigen Teilen mit flachen gegenüberliegenden Basen besteht, wobei darin jeweilige rechteckige Fenster (5') und (5'') zu sehen sind, die zum Ausrichten von geflochtenen Stahlkabeln (6') und (6) verwendet werden.
An den Seiten des genannten Teils (18) befinden sich senkrecht dazu jeweils Wellen (19') und (19',) mit entsprechenden Rollen (4') und (4',) sowie entsprechenden Kupplungen (3') und (3',), die zum Auf- und Abwickeln der jeweiligen geflochtenen Stahlkabel (6') und (6") vorgesehen sind, die nach dem Durchlaufen der Kabelausrichtungsstützen (5') und (5") mittels der Fackelbefestigungselemente (9') und (9") an den IR-Fackeln (8') und (8") befestigt werden, nachdem sie die Durchgangslöcher (7') und (7") durchlaufen haben.
Als interne Steuerelemente sind vorgesehen:
.- eine elektronische Steuereinheit (11),
.- eine Batterie zur Stromversorgung der Baugruppe (10),
.- Magnetschalter zur Aktivierung der IR-Leuchtfeuer (12') und (12"),
.- ein pyrotechnischer Sequenzer (13),
.- ein Schutzsequenzer (16) zur Verhinderung der versehentlichen Zündung der Leuchtraketen (8') und (8")
.- ein Autopilot (15).
Als externes Element ist eine Zielsteuerung (CCS) vorhanden.

2. Das Luftziel, das mit einem geschleppten IR-Leuchtraketensystem gemäß Anspruch 1 ausgestattet ist und **dadurch gekennzeichnet ist, dass** die Steuerung und der Betrieb des Luftziels mittels des (CCS) erfolgen, bei dem es sich um eine externe Fernsteuerung handelt, die auf die elektronische Steuereinheit (11) einwirkt, um das Luftziel mittels des Autopiloten (15) und der IR-Leuchtraketen (8') und (8") mittels der geflochtenen Stahlkabel (6') und (6") zu mobilisieren, die die Flares mittels entsprechender Befestigungselemente (9') und (9") sichern, und wobei wiederum die Kabel (6') und (6") mittels der Kupplungen (3') und (3"), die die auf den Rollen (4') und (4") aufgewickelten Kabel, die durch die Ausrichtungsstützen (5') und (5") laufen, allmählich abwickeln, durch die Löcher (17) geführt werden, bis sie in den IR-Leuchtraketen (8') und (8") befestigt sind, so dass sie langsam abgewickelt werden können, gesteuert durch die externe Steuerung (CCS).

3. Luftziel mit einem geschleppten IR-Leuchtsignalsystem gemäß den vorstehenden Ansprüchen, **dadurch gekennzeichnet, dass** die Leuchtsignal-Haltevorrichtung (2) an einem Flügel oder an beiden Flügeln des Luftziels befestigt ist.

## Revendications

1. Cible aérienne équipée d'un système de fusées éclairantes IR remorquées, **caractérisée en ce qu'**elle est constituée d'un dispositif de support pour un ensemble allongé en forme de T (D), fabriqué en alliage métallique haute performance et fixé à l'extrémité de l'aile (14) de ladite cible aérienne, servant de support aux éléments suivants :
.- un support de fixation (1), formé d'une plaque mince de forme rectangulaire située dans la verticale de l'axe imaginaire de l'ensemble « D » et dont les deux sommets supérieurs présentent des extensions circulaires avec des trous respectifs (17) qui serviront à visser ou riveter l'ensemble (D) à l'aile (14) de l'aéronef,
.- un support avant en forme de double L (18) situé dans la partie avant de la pièce (D) et composé de deux parties en forme de L avec des bases plates opposées, et dans lequel on peut voir des fenêtres rectangulaires respectives (5 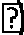 ) et (5 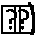 ) qui seront utilisées pour aligner les câbles en acier tressé (6 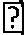 ) et (6).
Sur les côtés de la partie mentionnée (18) sont situés, perpendiculairement à celle-ci, des arbres respectifs (19 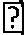 ) et (19 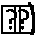 ) portant des rouleaux respectifs (4 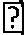 ) et (4 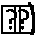 ) ainsi que des embrayages respectifs (3 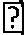 ) et (3 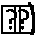 ) destinés à enrouler/dérouler les câbles en acier tressé respectifs (6 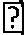 ) et (6 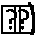 ) qui, après être passés par les supports d'alignement de câbles (5 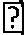 ) et (5 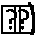 ), sont fixés aux fusées IR (8 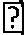 ) et (8 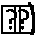 ) au moyen d'éléments de fixation de fusées (9 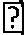 ) et (9 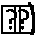 ) après être passés par les trous traversants (7 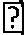 ) et (7 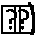 ).
Les éléments de commande internes suivants sont fournis :
.- une unité de commande électronique (11),
.- une batterie pour alimenter l'ensemble (10),
.- des interrupteurs magnétiques pour activer les balises IR (12 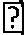 ) et (12 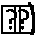 ),
.- un séquenceur pyrotechnique (13),
.- un séquenceur de protection (16) pour empêcher le déclenchement accidentel des fusées éclairantes (8 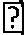 ) et (8 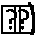 )
.- un pilote automatique (15).
Un contrôleur de cible (CCS) est présent en tant qu'élément externe.

2. La cible aérienne équipée d'un système de fusées IR remorquées selon la revendication 1 et **caractérisée en ce que** le contrôle et le fonctionnement de la cible aérienne sont effectués au moyen du (CCS) qui est un contrôleur externe à distance agissant sur l'unité de contrôle électronique (11) pour mobiliser la cible aérienne au moyen du pilote automatique (15) et des fusées IR (8) et (8"') au moyen des câbles en acier tressés (6") et (6"') fixant les leurres au moyen d'éléments de fixation respectifs (9") et (9"'), et dans laquelle, à leur tour, les câbles (6") et (6"'), au moyen des embrayages (3") et (3 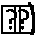 ) qui déroulent progressivement les câbles enroulés sur les rouleaux (4 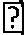 ) et (4 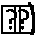 ) passant par les supports d'alignement (5 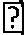 ) et (5 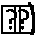 ), passent par les trous (17) jusqu'à ce qu'ils soient fixés dans les leurres IR (8 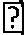 ) et (8 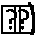 ) de manière à pouvoir être déroulés lentement sous le contrôle du contrôleur externe (CCS).

3. Cible aérienne équipée d'un système de fusées IR remorquées selon les revendications précédentes et **caractérisée en ce que** le dispositif de support des fusées (2) est fixé sur une aile ou sur les deux ailes de la cible aérienne.
